# EUROPÄISCHE PATENTSCHRIFT

(11) **EP 0 532 872 B1**
(45) Veröffentlichungstag und Bekanntmachung des Hinweises auf die Patenterteilung: **10.05.1995**
(21) Anmeldenummer: 92113087.8
(22) Anmeldetag: 31.07.1992
(51) Int. Cl.: C07F 7/20, C07F 7/18

(54) **Verfahren zur Reinigung von Alkoxysilanen**
Process for the purification of alkoxysilanes
Procédé de purification d'alkoxysilanes

(30) Priorität: 14.09.1991 DE 4130634
(43) Veröffentlichungstag der Anmeldung: 24.03.1993
(73) Patentinhaber: DEGUSSA AG, 60311 Frankfurt (DE)
(72) Erfinder: Göbel, Thomas, Dr., W-6450 Hanau 9 (DE); Panster, Peter, Dr., W-6458 Rodenbach (DE); Will, Werner, W-6460 Gelnhausen-Hoechst (DE); Kleinschmit, Peter, Prof. Dr., W-6450 Hanau 9 (DE)

(56) Entgegenhaltungen:
- EP-A- 0 282 846
- EP-A- 0 421 644

## Beschreibung

Gegenstand der Erfindung ist ein Verfahren zur Reinigung Von Alkoxysilanen von Chlor-haltigen Verunreinigungen. Alkoxysilane, insbesondere mit sterisch anspruchsvollen Gruppen, finden wachsendes Interesse in den Anwendungsfeldern Bautenschutz und Kabelmassen. Speziell für Organosilane, die in der Kabelindustrie Verwendung finden, sind dabei die Reinheitsanforderungen bezuglich des Säuren-, Basen-, insbesondere des Chlorid-Gehaltes extrem hoch. Alkoxysilane mit der allgemeinen Formel RₙSi(OR')₄₋ₙ werden durch Flüssig-Flüssig-, Gas-Flüssig- oder Gas-Gas-Phasenreaktion der korrespondierenden Chlorsilane mit Alkohol erhalten. Die nach der Veresterung erhaltenen Rohprodukte enthalten noch einen analytisch als HCl nachweisbaren Restsäuregehalt, der auf gewisse Anteile des sogenannten "Monochlorderivates" als Folge der nicht vollständig geführten Umsetzung während der Alkoholyse zurückzuführen ist. Ein derartiges Verfahren wird beispielsweise in der EP-A-421 644 beschrieben.
Chung and Hayes (Journal of Organometallic Chemistry, 265 (1984), pp. 135-139) beschreiben eine Methode für die Entfernung von Chlor-haltigen Verunreinigungen in Alkoxysilanen unter Verwendung von Lithiumaluminiumhydrid oder metallischem Natrium. Nur in Gegenwart von Natrium ließ sich der hydrolysierbare Chlor-Gehalt auf unter 100 mg/kg senken. Es ist dem Fachmann bekannt, daß Alkalimetalle in die Gruppe der Störfallstoffe fallen und diese Methode bei einem großtechnischen Einsatz eine umfangreiche Sicherheitsanalyse erforderlich macht und Sicherheitsprobleme verursachen kann.
Aus der EP-A-0 282 846 ist ein Verfahren zur Herstellung von Alkoxysilanen bekannt, bei dem man restliche Chlorsilane mit Hilfe von Metallalkoholaten entfernt.

In der EP-A- 0223 210 beschreiben die Verfasser ein Reinigungsverfahren für Organosilane der allgemeinen Formel RₙSi(OR')₄₋ₙ mit den Endgruppen R = C₁-C₈ unter Verwendung von sauren Clays oder Eisenchlorid, bei dem ebenfalls sehr niedrige Konzentrationen an Chlor-haltigen Verunreinigungen erreicht werden. Dieses Verfahren arbeitet bei Normaldruck und vorzugsweise an der Siedetemperatur des betreffenden Alkoxysilans. Je nach Struktur des Organosilans kommt es dabei aber, insbesondere in Gegenwart von starken Basen, zu einer thermisch induzierten Kondensation. Der dabei freiwerdende Alkohol senkt die Behandlungstemperatur. Dies führt im allgemeinen zu Verweilzeitverlängerungen, und infolge der Silanbildung müssen Ausbeuteverluste in Kauf genommen werden.

Aufgabe dieser Erfindung ist es daher, ein Verfahren zur Reinigung von Alkoxysilanen, speziell mit sterisch anspruchsvollen Endgruppen, derart durchzuführen, daß neben befriedigenden Ausbeuten der Gesamtchlorgehalt auf deutlich unter 150 mg/kg gesenkt werden kann.

Gegenstand der Erfindung ist ein Verfahren zur Reinigung von durch Organosiliciumverbindungen mit hydrolysierbaren Chloratomen verunreinigten Alkoxysilanen, das dadurch gekennzeichnet ist, daß man die Alkoxysilane in einem Druckreaktor mit einem Alkohol, vorzugsweise in Gegenwart eines HCl-Acceptors, bei einer Temperatur von 5 °C bis 160 °C, bevorzugt 40 bis 70 °C, oberhalb des Siedepunkts des verwendeten Alkohols und dem sich dabei einstellenden Druck umsetzt.
Dieser beläuft sich im allgemeinen auf 1 bis 50 bar.

Bevorzugt setzt man den Alkohol ein, der mit den Alkoxygruppen am Si-Atom korrespondiert.
Mindestens eingesetzt werden muß eine der Menge der zu hydrolysierenden Cl-Atome äquivalente Alkoholkonzentration. Im allgemeinen beläuft sie sich auf 5 bis 40 Gew.-%, bezogen auf das Gesamtgemisch Die Temperatur ist natürlich auch auf die Zersetzungstemperatur des Alkoxysilans abzustellen, so daß die Reaktionszeit im allgemeinen zwischen 5 min und 48 h betragen kann.
Im Anschluß daran trennt man das ausgefallene Chlorid ab und erhält nach dem Abdestillieren des Alkohols ein sehr reines Alkoxysilan, das weniger als 15 »g/g hydrolysierbares Chlorid enthält.
Die Methode bezieht sich auf Alkoxysilane der allgemeinen Formel 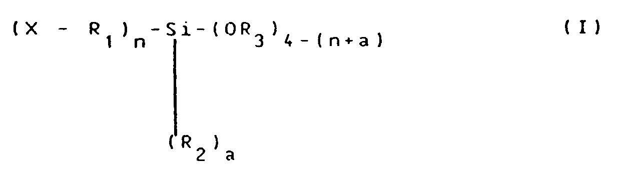
n = 0, 1, 2
a = 0, 1 worin
- R₁: - einer Alkylengruppe der Kettenlänge C₃-C₂₀
- einer Alkenylengruppe (Vinylen, Propylen)
- einer Arylengruppe (Phenylen, Tolyl-, Xylyl-)
- und/oder Aralkylgruppe (Benzyl)
- X: - einer funktionellen Gruppe (H, F, Cl, Br, I, CN, SCN, NH₂, N₃, Azomethine, Thioharnstoff-, Harnstoff-, Perfluoro-Reste)
- R₂: - einer Methyl-, Ethyl-, Propyl-, oder der entsprechenden Perfluorogruppe
- einer Alkenylgruppe (Vinyl-, Allyl-)
- einer Arylgruppe (u.a. Phenyl-, Tolyl-, Xylyl)
- und/oder Aralkylgruppe (Benzyl)
- R₃: - insbesondere einer Methyl-, Ethyl-, Propyl- oder Butylgruppe
- einer Alkylalkoxygruppe, bevorzugt Methylmethoxy und Ethylethoxy, oder einem Fettalkohol polyglykoletherrest, Alkylphenolpolyglykoletherrest -CH₂CH2-(O-CH₂-CH₂)_{y}R₄ mit y = 0-25 mit R = C₁-C₁₄-Alkyl, Aralkyl (Benzyl, Phenyl), und der allgemeinen Formel 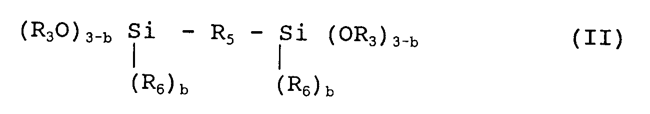
worin
- R₃: - wie oben, b = 0,1
- R₆: - einer Methyl-, Ethyl- oder Propylgruppe entsprechen
- R₅: - einer Alkylenkette mit C₄-C₂₀, bevorzugt
- einer Alkenylkette mit C₄-C₂₀, bevorzugt
   oder -(CH₂)_{y} -S₁₋₈-(CH₂)_{y}- 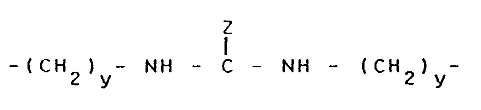 -(CH₂)_{y}- NH - (CH₂)_{y}-
   Z = O, S
   y= 1-12
entsprechen.

Spezielle Beispiele für Alkoxysilane sind: Propyltrimethoxysilan, Propyltriethoxysilan, Methyltrialkoxysilane, Dimethyldialkoxysilane, Phenylethyltrialkoxysilane, Hexadecyltrialkoxysilane, Cyclohexenyltrialkoxysilane, Bis(trialkoxysilyl-)-alkane, Bis(methyldialkoxysilyl)-alkane, Bis(dimethylalkoxysilyl)-alkane (Alkoxy: Methoxy, Ethoxy). Als Neutralisationsmittel sind wasserfreies Ammoniak, organische Amine (vorzugsweise tertiäre Amine), basische Komponenten wie Natriumalkoholate (sowie deren Lösungen), NaOH, KOH, CaO, Ca(OH)₂, MgO, Mg(OH)₂, Na₂CO₃, CaCO₃, MgCO₃ oder Alkylenoxide (vorzugsweise Elkylenoxid) geeignet. Basische Ionenaustauscher (z.B. REILLEX Polymers 405 oder 425) werden vorzugsweise eingesetzt, da diese im Reaktionsmedium meist unlöslich sowie thermisch stabil sind, die Säure binden und nach Abtrennung dieses Material leicht regeneriert werden kann.

Die Neutralisationsmittel werden entsprechend dem zuvor bestimmten Gesamtchlorgehalt in äquivalenten molaren Mengen bzw. mit 0,1 bis 25 mol % Überschuß dem Reaktionsmedium zugesetzt.
Die Auswahl des Neutralisationsmittels, des Temperaturintervalls, der Behandlungszeit und die Menge des zugesetzten Alkohols erfolgt abhängig von der Funktionalität und Struktur des eingesetzten Alkoxysilans.

Ein weiterer Vorteil dieses Verfahrens besteht darin, daß sich die anfallenden Neutralisationssalze sehr einfach und rasch kontinuierlich mittels z. B. Dekanter, Zentrifuge oder diskontinuierlich z. B mittels eines Seitz-Druckfilters aus dem Produktgemisch entfernen lassen. Bei den weiteren Aufarbeitungsschritten (einschl. der Destillation), treten keine Schwierigkeiten auf. Das Abfallsalz kann leicht durch Spülen mit Alkohol von anhaftenden Produkten befreit werden. Die Rückführung dieser alkoholischen Lösungen vermindert eventuelle Ausbeuteverluste.

### Beispiele

### Beispiel 1 Reinigung bei Normaldruck (analog EP-A-223210)

130 kg Hexadecyltrimethoxysilan (Chloridgehalt: 2,372 %, alkoholische Titration mit Silbernitrat) wird im Reaktor vorgelegt:
17.3 kg einer 30 %-igen Natriummethylat-Lösung (10 % Überschuß) werden zugesetzt. Die Lösung ist stark alkalisch, was auch am Umschlagspunkt des zugesetzten Phenolphthaleins erkennbar ist. Das Produktgemisch wird bis auf Rückflußbedingungen aufgeheizt und bis zu 60 min bei der sich einstellenden Temperatur belassen. Anschließend wird Methanol abdestilliert; zur Vervollständigung der Destillation wird ein Vakuum angelegt, die maximale Sumpftemperatur liegt bei 120 °C. Das Rohprodukt enthält nach Filtration noch 0,7 % hydrolysierbares Chlorid (bzw. 1200 »g/g Chlorid, alkoholische Titration mit AgNO³). Die gaschromatographische Analyse ergibt einen Monomergehalt von 79,2 Gew.-% und einen Methanolgehalt von 0,29 Gew.-% Nach Destillation liegt der Anteil des hydrolysierbaren Chlorids bei 750 »g/(g (= ppm), der Gehalt von Hexadecyltrimethoxysilan bei 96,5 %.

### Beispiel 2 (analog EP-A-223 210)

Dieses Beispiel zeigt die weitere Behandlung analog zum Verfahren nach der EP-A 223 210 A2, Beispiel 2
- Ansatz:: 130 kg Hexadecyltrimethoxysilan
(2,372 % Chlorid)
17,3 kg NaOCH₃/CH₃OH (30%-ig)
Nach Methanol-Abzug erfolgt der Zusatz von Eisen(III)-chlorid ("ferric chloride") bezogen auf 0,7 % Gesamtchlorgehalt. Das Produktgemisch wird nur bei 160 °C 60 min lang gerührt und dann abgekühlt. Laut gaschromatographischer Analyse beträgt der Monomergehalt jetzt 70,2 Gew,-%, der Alkoholgehalt 0,34 Gew.-%. Nach der Destillation beträgt der Gesamtchlorwert 80 ppm (Monomergehalt 95,1 Gew.-%).

### Beispiel 3 Reinigung unter Druck

- Ansatz:: 130 kg Hexadecyltrimethoxysilan
(2,372 % Chlorid)
17,3 kg NaOCH₃/Ch₃OH (30 %-ig)
7,5 kg zusätzlicher Methanol-Eintrag

Hexadecyltrimethoxysilan (sauer) wird bei Raumtemperatur in einen Druckreaktor eingetragen. Das Produktgemisch wird bei 125 bis 130 °C 60 min umgesetzt; dabei baut sich ein Druck von 4 bis 6 bar auf. Das Rohprodukt enthält nach Filtration noch 40 »g/g (= ppm)Cl⁻ nach alkoholischer Titration, der Monomergehalt liegt bei 78,8 Gew.-%, die MethanolKonzentration bei 0,24 Gew.-%. Nach Endreinigung können hinsichtlich des hydrolysierbaren Chlorids 4 »g/g (= ppm), besser <10 ppm erreicht werden (Monomergehalt 97,3 Gew.-%)

### Beispiel 4 (entsprechend Beispiel 3)

- Ansatz:: 800 g n-Octyldiisopropylethoxysilan (sauer)
(3,27 % Chlorid)
242 g NaOC₂H₅/C₂H₅OH (21 %-ig)
258 g C₂H₅OH

Mach der Destillation erhält man 92,1 Gew.-% n-Octyldiisopropylethoxysilan mit einem Anteil an Chlorid von <10 ppm.

### Beispiel 5

- Ansatz:: 125 kg Bis(3-Diethoxysilylpropyl)-monosulfan (1,75 % Chlorid)
2,5 kg CaO
12,5 kg C₂H₅OH

siehe Beispiel 3.

Das Rohprodukt wird bei 140 - 145 °C 30 min lang behandelt. Das Gemisch enthält nach Filtration noch 81 »g/g (= ppm) Chlorid. Nach Destillation können hinsichtlich des hydrolysierbaren Chlorids bei einem Monomergehalt >96,2 % < 15 ppm erreicht werden.

### Beispiel 6

- Ansatz: 135 kg Bis(3-triethoxysilylpropyl)-amin (1,10 % Chlorid)
0,9 kg Ammoniak (flüssig)
10,0 kg C₂H₅OH

Verfahrensbeschreibung: siehe Ansatz 3 Nach der Destillation erhält man 93,7 Gew.-% Bis(-3-triethoxysilylpropyl)-amin mit einem Anteil an Chlorid von < 10 ppm.

## Patentansprüche

1. Verfahren zur Reinigung von durch Organosilicumverbindungen mit hydrolysierbaren Chloratomen verunreinigten Alkoxysilanen, dadurch gekennzeichnet, daß man die Alkoxysilane in einem Druckreaktor mit einem Alkohol, vorzugsweise in Gegenwart eines HCl-Acceptors, bei einer Temperatur von 5 °C bis 160 °C, bevorzugt 40 bis 70 °C, oberhalb des Siedepunkts des verwendeten Alkohols und dem sich dabei einstellenden Druck umsetzt.

2. Verfahren gemäß Anspruch 1,
dadurch gekennzeichnet, daß der verwendete Alkohol mit den Alkoxygruppen am Si-Atom korrespondiert.

3. Verfahren gemäß Anspruch 1 oder 2,
dadurch gekennzeichnet, daß man mindestens eine der zu hydrolysierenden Cl-Atome äquivalente Alkoholkonzentration einsetzt.

4. Verfahren gemäß einem oder mehreren der Ansprüche 1-3,
dadurch gekennzeichnet, daß es sich um Alkoxysilane der allgemeinen Formel 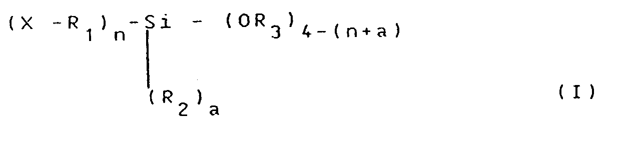 n = 0, 1, 2
a = 0, 1 worin
R₁
- einer Alkylengruppe der Kettenlänge C₃-C₂₀
- einer Alkenylengruppe (Vinylen-, Propylen-)
- einer Arylengruppe (Phenylen, Tolyl-, Xylyl-)
- und/oder Aralkylgruppe (Benzyl)
X
- einer funktionellen Gruppe (H, F, Cl, Br, I, CN, SCN, NH₂, N₃, Azomethine, Thioharnstoff-, Harnstoff-, Perfluoro-Reste)
R₂
- einer Methyl-, Ethyl-, Propyl-, oder der entsprechenden Perfluorogruppe
- einer Alkenylgruppe (Vinyl- Allyl-)
- einer Arylgruppe (u.a. Phenyl-, Tolyl-, Xylyl)
- und/oder Aralkylgruppe (Benzyl)
R₃
- insbesondere einer Methyl-, Ethyl-, Propyl- oder Butylgruppe,
- einer Alkylalkoxygruppe, bevorzugt Methylmethoxy und Ethylethoxy, oder einem Fettalkoholpolyglykoletherrest, Alkylphenolpolyglykoletherrest -CH₂CH₂-(O-CH₂-CH₂)_{y}R₄ mit y =0-25 und R₄ = C₁ -C₁₄-Alkyl, Aralkyl (Benzyl, Phenyl)
und der allgemeinen Formel 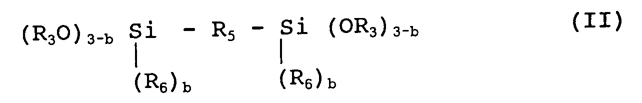
worin
R₃
- wie oben, b = 0, 1
R₆
- einer Methyl-, Ethyl- oder Propylgruppe entsprechen
R₅
- einer Alkylenkette mit C₄-C₂₀, bevorzugt
- einer Alkenylkette mit C₄-C₂₀, bevorzugt
oder -(CH₂)_{y} -S₁₋₈-(CH₂)_{y}- 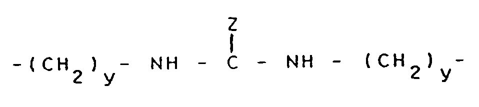 -(CH₂)_{y}-NH - (CH₂)_{y}-
Z =O, S
y= 1-12
entsprechen, handelt.

## Claims

1. A process for the purification of alkoxysilanes containing organosilicon compounds with hydrolyzable chlorine atoms as impurities, characterized in that the alkoxysilanes are reacted with an alcohol in a pressure reactor, preferably in the presence of an HCl acceptor, at a temperature 5°C to 160°C and preferably 40°C to 70°C above the boiling point of the alcohol used and under the pressure spontaneously established during the reaction.

2. A process as claimed in claim 1, characterized in that the alcohol used corresponds to the alkoxy groups at the Si atom.

3. A process as claimed in claim 1 or 2, characterized in that the alcohol is used at least in a concentration equivalent to the Cl atoms to be hydrolyzed.

4. A process as claimed in one or more of claims 1 to 3, characterized in that the alkoxysilanes correspond to the following general formula : 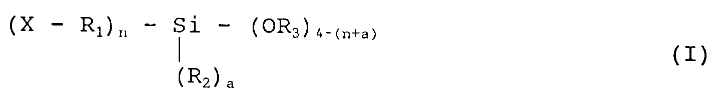 n = 0, 1, 2
a = 0, 1
in which
R₁ = a C₃₋₂₀ alkylene group,
an alkenylene group (vinylene, propylene),
an arylene group (phenylene, tolyl, xylyl)
and/or an aralkyl group (benzyl);
X = a functional group (H, F, Cl, Br, I, CN, SCN, NH₂, N₃, azomethine, thiourea, urea, perfluoro groups);
R₂ = a methyl, ethyl, propyl or the corresponding perfluoro group,
an alkenyl group (vinyl, allyl),
an aryl group (inter alia phenyl, tolyl, xylyl)
and/or an aralkyl group (benzyl);
R₃ = in particular a methyl, ethyl, propyl or butyl group, an alkylalkoxy group, preferably methylmethoxy and ethylethoxy, or a fatty alcohol polyglycol ether group, alkyl phenol polyglycol ether group -CH₂CH₂-(O-CH₂-CH₂)_{y}R₄ with y = 0 - 25 and R₄ = C₁₋₄ alkyl, aralkyl (benzyl, phenyl),
and to the following general formula: 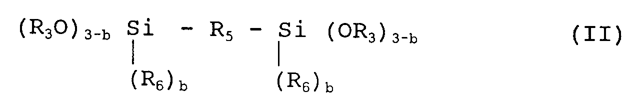 in which
R₃ is as defined above, b = 0, 1
R₆ = a methyl, ethyl or propyl group,
R₅ = a C₄₋₂₀ alkylene chain,
a C₄₋₂₀ alkenyl chain,
or -(CH₂)_{y} -S₁₋₈-(CH₂)_{y}- 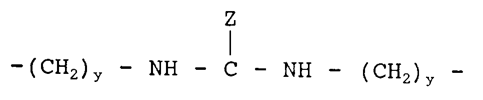 -(CH₂)_{y} - NH - (CH₂)_{y} -
Z = O, S
y = 1 - 12.

## Revendications

1. Procédé de purification d'alcoxysilanes contaminés par des composés organosiliciques avec des atomes de chlore hydrolysables, caractérisé en ce qu'on transforme les alcoxysilanes dans un réacteur pour fluide sous pression avec un alcool, de préférence en présence d'un accepteur de HCl, à une température de 5°C à 160°C, de préférence de 40 à 70°C, au-dessus du point d'ébullition de l'alcool utilisé et la pression s'installant dans de cas.

2. Procédé selon la revendication 1, caractérisé en ce que, l'alcool utilisé correspond avec les groupes alcoxy à l'atome de Si.

3. Procédé selon la revendication 1 ou 2, caractérisé en ce qu'on met en oeuvre au moins une concentration d'alcool équivalente aux atomes de Cl à hydrolyser.

4. Procédé selon une ou plusieurs des revendications 1-3, caractérisé en ce qu'il s'agit d'alcoxysilanes de formule générale : 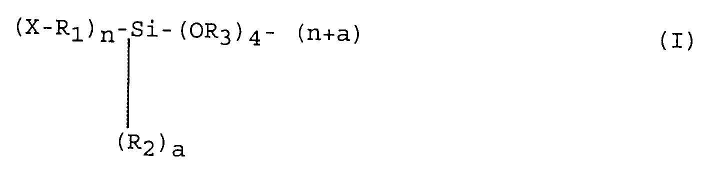 n = 0, 1, 2
a = 0,1
dans laquelle :
R₁ représente
: un groupe alkylène de longueur de chaîne C₃-C₂₀,
: un groupe alcényle (vinylène, propylène)
: un groupe arylène (phénylène, groupe totyle, xylyle et/ou aralkyle (benzyle),
X représente
: un groupe fonctionnel (H, F, Cl, Br, I, CN, SCN, NH₂, N₃, azométhine, des radicaux de thiourée, durée, de perfluor),
R₂ représente
: un groupe méthyle, éthyle, propyle, ou le groupe perfluoro correspondant,
: un groupe alcényle (vinyle, allyle),
: un groupe aryle (entre autres phényle, tolyle, xylyle) et/ou,
: un groupe aralkyle (benzyle),
R₃ représente
: en particulier un groupe méthyle, éthyle, propyle, ou butyle,
un groupe alkylalkoxy, de préférence méthylméthoxy et éthyléthoxy ou un radical d'éther d'alcool gras de polyglycol, un radical d'éther d'alkylphénolpolyglycol, - CH₂CH₂-(O-CH₂-CH₂)_{y} R₄ avec y = 0-25 avec R₄ = C₁-C₁₄, alkyle, aralkyle (benzyle, phényle) et la formule générale : 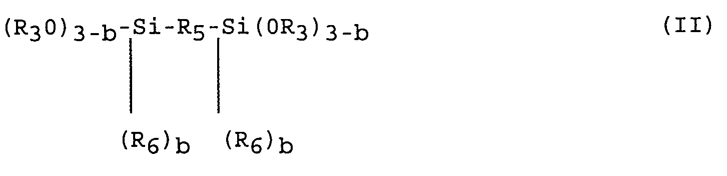
dans laquelle :
R₃
- est comme ci-dessus, b = 0,1,
R₆
- représente un groupe méthyle, éthyle ou propyle,
R₅
- représente une chaîne alkylène avec C₄-C₂₀,
- une chaîne alcényle avec C₄-C₂₀,
ou -(CH_{2)y} - S₁₋₈-(CH₂)_{y}- 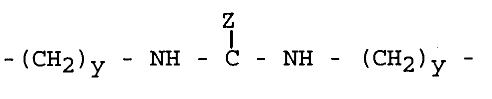 -(CH₂)_{y} - NH - (CH₂)_{y} -
Z = 0, S
y = 1-12.
